# EUROPEAN PATENT APPLICATION

(11) **EP 4 835 686 A1**
(43) Date of publication of application: **04.11.2026**
(21) Application number: 26173799.3
(22) Date of filing: 21.04.2026
(51) Int. Cl.: G06F 16/31

(54) **LANGUAGE-AGNOSTIC RETRIEVAL AUGMENTED GENERATION FOR CODEBASES**

(30) Priority: 30.04.2025 US 202519195353
(71) Applicant: Microsoft Technology Licensing, LLC, Redmond, WA 98052 (US)
(72) Inventor: DEMARNE, Mathieu Baptiste, Redmond, 98052 (US); DENG, Kai, Redmond, 98052 (US); VERMAREDDY, Divya, Redmond, 98052 (US); VENKATRAMAN KRISHNAN, Subramaniam, Redmond, 98052 (US); LIN, Ya, Redmond, 98052 (US); ZHU, Yiwen, Redmond, 98052 (US); WANG, Wenjing, Redmond, 98052 (US); CILIMDZIC, Miso, Redmond, 98052 (US); LERNER, Hannah Margrete, Redmond, 98052 (US); BARARIA, Swati, Redmond, 98052 (US); LU, Yunlei, Redmond, 98052 (US)
(74) Representative: CMS Cameron McKenna Nabarro Olswang LLP

(57) **Abstract**

Methods, apparatuses, and products for language-agnostic retrieval augmented generation for codebases, including: generating a plurality of chunks from a codebase; generating, from the plurality of chunks, a plurality of enhanced chunks, wherein generating the plurality of enhanced chunks comprises: providing, for each chunk of the plurality of chunks, a particular chunk and one or more proximate chunks that are sequentially proximate to the particular chunk as input to a machine learning model that redefines one or more boundaries of the particular chunk based on the one or more proximate chunks; receiving, as output from the machine learning model and in response to the input, a particular enhanced chunk of the plurality of enhanced chunks; and generating a plurality of indexes for the plurality of enhanced chunks each corresponding to a different search strategy of a plurality of search strategies.

## Description

### BACKGROUND

Generative artificial intelligence (Al) uses trained machine learning models such as large language models (LLMs) process user-provided requests to produce some requested content. Typically, the capabilities of generative AI models are limited by the training data used in training the models. An inadequately trained model may not be able to interpret certain types of information or may produce irrelevant or inaccurate content in response to a request. Though models can be retrained or fine-tuned to expand the usable knowledge base of the model these processes are computationally and resource intensive. This may limit how frequently a model can be updated.

Retrieval-augmented generation (RAG) expands the information available to generative AI models to process user requests. Using RAG, external data sources are accessed and searched for data relevant to a user request. This relevant information is provided as a supplemental knowledge for processing the user request. As some models are limited in the amount of data that can be processed at once, larger files are divided into "chunks" and converted into vector embeddings. These vector embeddings can be searched so as to provide the model with the vector embeddings of relevant chunks rather than the entire file.

Chunking generally relies on dividing the file using defined delimiters such as punctuation marks, line breaks, page breaks, or along other formatting boundaries. Though these approaches are suitable for documents storing natural language content, these approaches may not be suitable to codebases. The structure, formatting, and syntax of code makes chunking approaches used for documents unusable as the resulting chunks may not capture important aspects or nuances of the code. Moreover, as the structure, format, and syntax of code may vary significantly across different programming languages and types of languages it is difficult to define delimiters for chunking code that is language-agnostic.

### SUMMARY

According to embodiments of the present disclosure, various methods, apparatus, and products for language-agnostic retrieval augmented generation for codebases are described herein. In some aspects, language-agnostic retrieval augmented generation for codebases includes: generating a plurality of chunks from a codebase; generating, from the plurality of chunks, a plurality of enhanced chunks, wherein generating the plurality of enhanced chunks comprises: providing, for each chunk of the plurality of chunks, a particular chunk and one or more proximate chunks that are sequentially proximate to the particular chunk as input to a machine learning model that redefines one or more boundaries of the particular chunk based on the one or more proximate chunks; receiving, as output from the machine learning model and in response to the input, a particular enhanced chunk of the plurality of enhanced chunks; and generating a plurality of indexes for the plurality of enhanced chunks each corresponding to a different search strategy of a plurality of search strategies. In some aspects, an apparatus may include a memory and one or more processing devices, operatively coupled to the memory, the one or more processing devices configured to perform similar steps. In some aspects, a computer program product comprising a computer readable storage medium may store computer program instructions that, when executed, perform similar steps.

### BRIEF DESCRIPTION OF DRAWINGS

Fig. 1 sets forth a diagram of an example system for language-agnostic retrieval augmented generation for codebases in accordance with some embodiments.
Fig. 2 sets forth a flow chart illustrating an example method of language-agnostic retrieval augmented generation for codebases in accordance with some embodiments.
Fig. 3 sets forth a flow chart illustrating an additional example method of language-agnostic retrieval augmented generation for codebases in accordance with some embodiments.
Fig. 4 sets forth a flow chart illustrating an additional example method of language-agnostic retrieval augmented generation for codebases in accordance with some embodiments.
Fig. 5 sets forth a flow chart illustrating an additional example method of language-agnostic retrieval augmented generation for codebases in accordance with some embodiments.
Fig. 6 sets forth a flow chart illustrating an additional example method of language-agnostic retrieval augmented generation for codebases in accordance with some embodiments.
Fig. 7 sets forth a flow chart illustrating an additional example method of language-agnostic retrieval augmented generation for codebases in accordance with some embodiments.
Fig. 8 sets forth a flow chart illustrating an additional example method of language-agnostic retrieval augmented generation for codebases in accordance with some embodiments.
Fig. 9 sets forth a flow chart illustrating an additional example method of language-agnostic retrieval augmented generation for codebases in accordance with some embodiments.
Fig. 10 sets forth a flow chart illustrating an additional example method of language-agnostic retrieval augmented generation for codebases in accordance with some embodiments.
Fig. 11 illustrates an exemplary computing device that may be specifically configured to perform one or more of the processes described in the present disclosure.
Fig. 12 sets forth a block diagram of a cloud service provider service architecture in accordance with some embodiments of the present disclosure.

### DESCRIPTION OF EMBODIMENTS

Generative AI uses trained machine learning models such as LLMs process user-provided requests to produce some requested content. These generative AI models are typically trained using large knowledge bases so as to provide the model with the requisite knowledge to interpret and generate a wide breadth of content. Though extensively trained, these models are limited to the capabilities and information learned from this knowledge base unless further measures are taken. As training and fine-tuning models is a computationally and resource intensive process, this may limit how frequently models can be updated based on additional data.

RAG expands the information available to generative AI models to process user requests. Using RAG, information relevant to a user request is retrieved by searching various data sources and made available to the generative AI model for use in processing the user request. To facilitate searching large files, these files are typically divided into "chunks" that are each converted into vector embeddings and indexed so that vector embeddings responsive to a search query are retrieved for the model. For example, a document can be divided into chunks using delimiters such as punctuation marks, special characters such as line breaks, chapter breaks, page breaks, and the like.

Though these approaches for chunking and indexing are suitable for documents, codebases present unique challenges for RAG. Codebases are often too large to be processed as a whole by a model. Also, the structure, formatting, and syntax of code makes chunking approaches used for documents unusable as the resulting chunks may not capture important aspects or nuances of the code. Moreover, as the structure, format, and syntax of code may vary significantly across different programming languages and types of languages it is difficult to define delimiters for chunking code that is language agnostic.

To address these concerns, the approaches set forth herein describe a system for indexing a codebase for RAG. Each file of the codebase is divided into fixed-sized chunks. A model adjusts the boundaries of each chunk taking into account proximate chunks, producing enhanced chunks that may be larger or smaller than their original chunk. Each enhanced chunk is then indexed multiple times using different data relevant to the enhanced chunk, including the content of the enhanced chunk, a description of the enhanced chunk, and references to other code included in the enhanced chunk. When a user request is received, a search strategy for that request is determined and its corresponding index is used to search the vector embeddings indexed by that index. The vector embeddings responsive to the search are returned and used by a generative AI model for RAG.

The described approaches can improve the accuracy and efficiency of RAG when applied to codebases by restructuring how code is chunked and indexed. By dynamically adjusting chunk boundaries based on the context of surrounding code, the system can produce semantically coherent chunks that better preserve functional relationships within the code. Indexing each chunk using multiple representations (e.g., the code itself, a generated description, inter-code references) allows for more flexible and targeted retrieval strategies depending on the nature of the user request. This can reduce irrelevant or incomplete retrieval results and enhance the relevance of information presented to the generative model. The system further supports language-agnostic processing, enabling consistent performance across diverse codebases without the need for language-specific customization. Collectively, these improvements enable more precise, context-aware responses from generative AI models without requiring retraining or fine-tuning.

RAG can be leveraged to expand the knowledge usable by generative AI models without retraining or fine-tuning. Accordingly, RAG can be usable with codebases as the use of generative AI in software development expands. The approaches set forth herein provide a language-agnostic approach for indexing and searching codebases for RAG. This can expand the capabilities and application of generative AI models in software-related fields, increasing the overall quality and accuracy of the content produced by these models.

By enabling more accurate and context-aware retrieval from large codebases, the described system can enhance the effectiveness of generative AI tools in software development workflows. This can lead to improved developer productivity, reduced time-to-solution, and more reliable AI-assisted code generation. Organizations can leverage the system to support a wider range of programming languages without investing in custom preprocessing pipelines, reducing operational overhead. The ability to provide high-quality, up-to-date information to generative models without retraining also lowers infrastructure costs and increases agility. These advantages can improve user satisfaction, accelerate adoption of AI-powered development tools, and create competitive differentiation in the software tooling market.

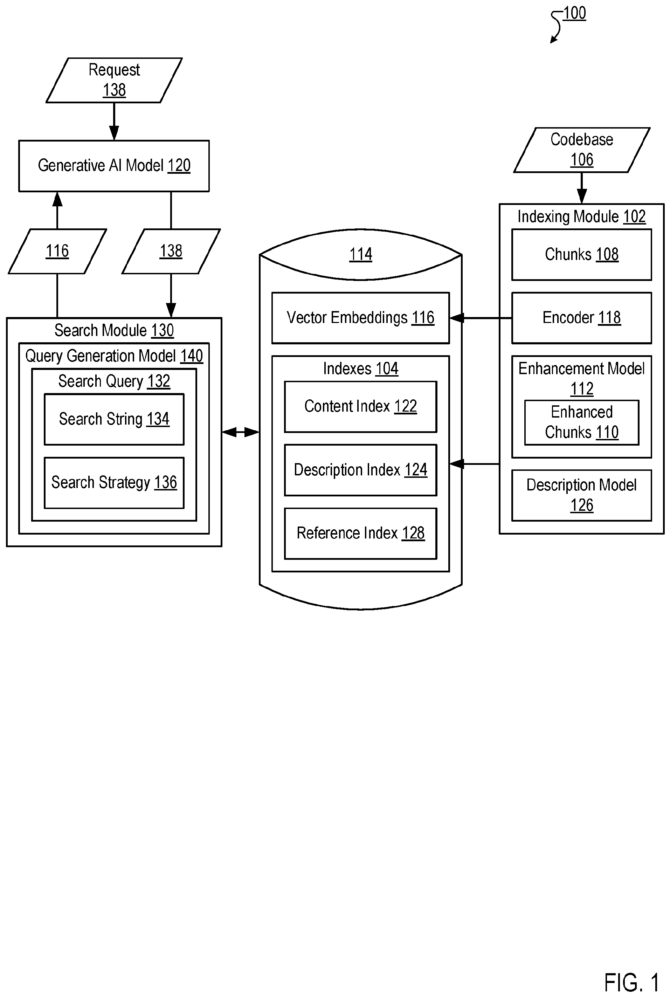

Fig. 1 sets forth an example system 100 for language-agnostic RAG for codebases in accordance with some embodiments of the present disclosure. The system 100 includes an indexing module 102. The indexing module 102 is an application, process, or service that generates indexes 104 that facilitate searching a codebase 106 for RAG. Although the following discussion is presented in the context of indexing and searching a codebase 106 for RAG, readers will appreciate that the approaches set forth herein can be used to index and search a codebase 106 for purposes other than RAG. As referred to herein, a codebase 106 is a collection of source code for some project such as an application or a software component. In some embodiments, the codebase 106 includes one or more files storing some portion of source code. In some embodiments, the codebase 106 can also include additional data for or related to the project. For example, in some embodiments, the codebase 106 can also include additional files used to build and/or execute the compiled project such as configuration files, build scripts, documentation, and the like.

To begin, the indexing module 102 accesses or is provided a codebase 106 to index. In some embodiments, the codebase 106 can be locally stored or accessible to the indexing module 102. In some embodiments, the codebase 106 can be accessed from a remote storage location. For example, in some embodiments, the indexing module 102 accesses the codebase 106 from a remote code repository or other storage location as can be appreciated. Next, the indexing module 102 generates multiple chunks 108 from the codebase 106. A chunk 108 is a smaller portion or segment of a file of the codebase 106. Thus, in some embodiments, generating chunks 108 from the codebase 106 includes logically subdividing files of the codebase 106 each into potentially many chunks 108. Generating chunks 108 from the codebase 106 can be performed using various approaches.

Readers will appreciate that, in contrast with unstructured data such as text document that has delimiters including punctuation marks, chapter or paragraph breaks, and the like, source code may not include clearly defined or detectable delimiters for generating chunks 108 of variable sizes. Moreover, due to the differences in formatting, structure, and syntax of different programming languages, delimiters defined for one programming language may not be applicable to code in another programming language. Accordingly, in some embodiments, generating chunks 108 from the codebase 106 includes generating chunks 108 by dividing each file of the codebase 106 into chunks 108 of a fixed size (e.g.,. a fixed number of bytes, a fixed number of characters). This allows the indexing module 102 to generate chunks 108 in a language-agnostic fashion as source code in any programming language can be divided into fixed-size chunks 108. In some embodiments where a file is not evenly divisible by the fixed size, a file of the codebase 106 can be divided into multiple chunks 108 having a fixed size and a chunk 108 encoding the remainder of the file up to the fixed size. The fixed size used can be determined according to various design or engineering considerations. For example, in some embodiments, the fixed size can be small enough to fit within the attention window of a machine learning model. Other chunking approaches are also contemplated within the scope of the present disclosure.

As the chunks 108 are of a fixed size, a given chunk 108 may lack contextually relevant or otherwise important data stored in other chunks 108. For example, assume a given chunk 108 that includes the middle portion of a method definition. In this example, the beginning and ending of the method definition are stored in other chunks 108. This can present problems when searching the codebase 106. For example, this incomplete method definition may not be responsive to some query to which it is relevant, preventing the chunk 108 from being included in a search response. As another example, though this chunk 108 may be responsive to a query and included in a search response, the chunks 108 storing the remainder of the method definition may not be responsive, causing an incomplete method definition to be returned in the search response.

Accordingly, after generating chunks 108 from the codebase 106, the indexing module 102 analyzes and redefines the boundaries of each chunk 108 (e.g., by adding data from a sequentially adjacent chunk 108 and/or removing data from the beginning and/or end of the chunk 108). A chunk 108 that has been analyzed and its boundaries redefined as appropriate are hereinafter referred to as enhanced chunks 110. Readers will appreciate that, in some embodiments, the boundaries of a given chunk 108 may not be modified. Accordingly, in some embodiments, a chunk 108 determined to not require boundary modification is also considered an enhanced chunk 110.

In some embodiments, generating the enhanced chunks 110 from the chunks 108 includes iteratively providing each chunk 108 to a machine learning model trained to redefine boundaries of input chunks 108 and provide, as output, a corresponding enhanced chunk 110. Such a model is hereinafter referred to as an enhancement model 112. The enhancement model 112 can include any type of trained machine learning model as can be appreciated. Particularly, as the enhancement model 112 must interpret the code included in chunks 108, the enhancement model 112 can include a language model such as an LLM, small language model (SLM), or another model trained to interpret source code. In some embodiments, the enhancement model 112 can include an off-the-shelf or general-purpose model. For example, off-the-shelf or general-purpose LLMs are trained on sufficiently large datasets so as to interpret source code and understand contextually relevant or important portions of code so as to be able to redefine chunk 108 boundaries. In some embodiments, the enhancement model 112 can be trained or fine-tuned using code-specific training data so as to provide the enhancement model 112 with the requisite knowledge for redefining chunk 108 boundaries.

In addition to a particular chunk 108, the enhancement model 112 is also provided, as input, one or more proximate chunks 108. The one or more proximate chunks 108 are sequentially proximate to the particular chunk 108 in that they can include one or more chunks 108 immediately preceding and/or following the particular chunk 108 in a sequence of chunks 108. In some embodiments, the particular chunk 108 provided to the enhancement model 112 is selected sequentially. For example, in some embodiments, a moving window of N chunks 108 is used to select a chunk 108 and N-1 proximate chunks 108. The particular number of proximate chunks 108 to be provided to the enhancement model 112 (e.g., the window size) can be determined according to various design or engineering considerations and can vary depending on where the particular chunk 108 is in the sequence of chunks 108. For example, fewer proximate chunks 108 can be included as input with a first or last chunk 108 compared to other, intermediary chunks 108 in the sequence of chunks 108.

The enhancement model 112 uses the additional contextual information provided by the proximate chunks 108 to determine how to redefine the boundaries of the particular chunk 108. Returning to the example above where a particular chunk 108 stores the middle portion of a method definition, the enhancement model 112 can redefine the boundaries of the particular chunk 108 to include the beginning and end of the method definition as stored in the proximate chunks 108. Thus, the resulting enhanced chunk 110 stores the complete method definition. When redefining the boundaries of a chunk 108, the resulting enhanced chunk 110 can include data stored in a proximate chunk 108 and/or can exclude some data originally stored in the chunk 108. Accordingly, in some embodiments, generating an enhanced chunk 110 from a particular chunk 108 can also include redefining the boundary of a proximate chunk 108 to exclude data added to the enhanced chunk 110 or to add data excluded from the enhanced chunk 110.

Readers will appreciate that, as the enhancement model 112 is trained with the requisite knowledge to interpret many programming languages, the particular approaches or criteria by which chunk 108 boundaries are redefined can vary depending on the programming language used in the chunk 108. For example, chunks 108 using object-oriented programming languages can have their boundaries redefined to encompass a class definition, a method definition, or similar aspect of the programming language. As another example, chunks 108 using structured markup languages can have their boundaries redefined to encompass a pair of starting and ending tags.

Next, the indexing module 102 generates multiple indexes 104 for the enhanced chunks 110. An index 104 is a data structure that enables search of vector embeddings 116 from a data store 114. The data store 114 can include, for example, a database such as a vector database, a data warehouse, or other data repository or storage location as can be appreciated. A vector embedding 116 is a representation of data as a multidimensional vector of numerical values. Each different index 104 facilitates searching vector embeddings 116 derived from different data associated with a given enhanced chunk 110. Although the indexes 104 are described as multiple indexes 104, readers will appreciate that, in some embodiments, these indexes 104 can be implemented as a single, multidimension index 104 with each index 104 described herein encoded as a different dimension. Accordingly, selecting a particular index 104 for search as described herein can also include selecting a particular dimension of a multidimensional index 104.

In some embodiments, an encoder 118 is used to convert some data into a vector embedding 116. The encoder 118 is a machine learning model, such as a neural network or another model as can be appreciated, that accepts data as input and provides the vector embedding 116 of that data as output. In some embodiments, the encoder 118 can be a component of a larger model architecture. For example, some machine learning models can use a transformer architecture that includes an encoder 118 for converting model inputs into vector embeddings 116 for processing. In some embodiments, where the codebase 106 is indexed for use in RAG to supplement a generative AI model 120, described in further detail below, the encoder 118 can include an encoder layer or other component of the generative AI model 120. This ensures that the vector embeddings 116 are encoded for accurate interpretation and processing by the generative AI model 120.

In some embodiments, the indexes 104 include a content index 122. The content index 122 facilitates searching for vector embeddings 116 based on the content of enhanced chunks 110 (e.g., the portion of the codebase 106 encoded into the enhanced chunks 110). Accordingly, in some embodiments, the indexing module 102 provides each enhanced chunk 110 to the encoder 118 and receives, from the encoder 118, the corresponding vector embedding 116.

In some embodiments, the indexes 104 include a description index 124. The description index 124 facilitates searching for vector embedding 116 based on natural language descriptions of the enhanced chunk 110. Accordingly, in some embodiments, the indexing module 102 provides a natural language description of each enhanced chunk 110 to the encoder 118 and receives, from the encoder 118, the corresponding vector embedding 116. In some embodiments, the indexing module 102 generates a natural language description for each enhanced chunk 110 by providing each enhanced chunk 110 as input to a description model 126 that provides, as output, the natural language description. The description model 126 may include any type of machine learning model trained to create natural language content. For example, the description model 126 can include a language model such as an LLM, a model that can interpret and create content across multiple modalities including natural language text such as a large multi-modal model (LMM), or another machine learning model as can be appreciated. Continuing with this example, in some embodiments, the description model 126 can include an LLM or SLM that is provided a prompt to provide a natural language description of an input enhanced chunk 110.

In some embodiments, the indexes 104 include a reference index 128. The reference index 128 facilitates searching vector embedding 116 based on any external code references included in the enhanced chunks 110. As referred to herein, an external code reference is a portion of code that references, invokes, or causes to be executed, code outside of the enhanced chunk 110 (e.g., in another enhanced chunk 110). In other words, in some embodiments, an external code reference is a portion of code whose execution or use is dependent on another portion of code outside of the enhanced chunk 110. For example, assume an enhanced chunk 110 stores a method definition. Further assume that this method definition includes a call to another method. This method call is an external code reference to that method. As another example, assume that the method definition includes a line of code for creating an instance of an object. Here, this line of code includes an external code reference to the class definition for that object. Other types of external code references are also contemplated within the scope of the present disclosure.

To generate the reference index 128, the indexing module 102 identifies, for each enhanced chunk 110, the external code references included therein. In some embodiments, this can include applying a parser, keyword search, or other algorithm for identifying external code references. In some embodiments, a trained machine learning model can be used that accepts, as input, an enhanced chunk 110 and provides, as output, data describing the external code references.

In some embodiments, the vector embeddings 116 searched using a reference index 128 can be based on a listing or enumeration of each identified external code reference for a respective enhanced chunk 110. In some embodiments, where a particular external code reference occurs multiple times, this listing or enumeration can include, for the particular external code reference, a single entry (e.g., independent of how often the external code reference occurs) or an entry for each occurrence. This listing or enumeration can then be provided as input to the encoder 118 to generate the vector embedding 116. In some embodiments, in addition to the identified external code references, the vector embeddings 116 searched using a reference index 128 can be based on a natural language description of each external code reference. In some embodiments, the identified external code references are provided as input to the description model 126 that provides, as output, natural language descriptions for each external code reference. Thus, each vector embedding 116 searched using the reference index 128 is based on the external code references and the descriptions of those external code references for the corresponding enhanced chunks 110.

The vector embeddings 116 described above are then stored in the data store 114 for subsequent search. Thus, each enhanced chunk 110 has stored, in the data store 114, vector embeddings 116 based on its content, its description, and its external code references. In some embodiments, the enhanced chunks 110 themselves can also be stored in the data store 114. The indexing module 102 then generates the content index 122, the description index 124, and the reference index 128 based on their respective vector embeddings 116. Generating these indexes 104 can be performed using any approach as would be understood by one skilled in the art for generating a vector index 104.

The system 100 also includes a search module 130. The search module 130 is a process, service, or application that searches for vector embeddings 116 responsive to a search query 132 using an index 104. The search query 132 includes a search string 134, a text string to which vector embeddings 116 are compared for search. The search query 132 also includes an indication of a search strategy 136. The search strategy 136 indicates which index 104 will be used when applying the search string 134. For example, where the search strategy 136 indicates a by-content search, the content index 122 will be used. As another example, where the search strategy 136 indicates a by-description search, the description index 122 will be used. In other words, the search strategy 136 indicates what set of vector embeddings 116 will be searched (e.g., vector embeddings 116 for the content, the description, or the external code references of the enhanced chunks 110).

As used herein, a search strategy can refer to a set of one or more parameters, operations, or retrieval heuristics used to guide the selection and execution of searches over vector embeddings indexed from enhanced code chunks. A search strategy may specify which index to query (e.g., content, description, or reference), how the query is interpreted or embedded, and what similarity metric or scoring function to apply. In some embodiments, a search strategy is derived automatically from a user request using a trained model and may include multiple coordinated strategies executed in parallel or sequence. The selected strategy or strategies can determine how relevant information is identified and retrieved to supplement generative AI processing.

In some embodiments, the search query 132 can be received directly via an exposed interface, such as an application program interface (API) of the search module 130 or another component of the system 100. In some embodiments, the search query 132 can be derived from the content of a request 138 issued to a generative AI model 120, a machine learning model trained to perform generative AI content generation. As referred to herein, generative AI uses models such as neural networks, including LLMs, multimodal large language models (MLLMs), and the like to generate content, such as text, code, graphics, animations, video, audiovisual representations, audio, speech, etc., in response to prompts. The generative AI models are trained using a corpus of training data content to learn the patterns and structure of that content. The generative AI model can then generate new content having the characteristics learned from the training data. Prompts can include text, code, audio, graphic, video, and representations in any other media. Such prompts can be provided to the generative AI model as a natural language input. For example, the approaches set forth herein can interact with a generative AI model using predefined prompts, dynamically generated prompts, prompts that include some portion of dynamically generated content (e.g., through the use of templates and dynamically populated variables), and the like.

Accordingly, in some embodiments, the request 138 includes a prompt issued to the generative AI model 120. Particularly, in some embodiments, the request 138 can include a natural language expression from which the search string 134 is extracted using a query generation model 140. The query generation model 140 is trained machine learning model that identifies a search string 134 from a request and determines a search strategy 136 for performing the search. Thus, in some embodiments, the search query 132 can include a RAG query for the generative AI model 120 in that the search query 132 is generated to search for vector embeddings 116 to be provided to the generative AI model 120 for RAG. The query generation model 140 can include any type of trained model as can be appreciated, particularly a model trained to interpret and generate natural language expressions, such as an LLM. In some embodiments, the search module 130 can provide the request 138 in a prompt to the query generation model 140 requesting a search string 134 and search strategy 136 for searching the data store 114 for enhanced chunks 110.

For example, assume a request 138 that includes the natural language expression "explain what method Y does." Here, the query generation model 140 identifies the search string 134 "method Y." As the request 138 requests a description of method Y, the query generation model 140 determines to use, as the search strategy 136, a by-description search using the description index 124. As another example, assume a request 138 that includes the natural language expression "where is method Y used." Here, as the request 138 requests indications of where method Y is used, the query generation model 140 determines to use, as the search strategy 136, a by-reference search using the reference index 128.

The search module 130 then searches the vector embeddings 116 using the search string 134 and the index 104 corresponding to the search strategy 136. In some embodiments, this includes generating a vector embedding 116 for the search string 134 (e.g., using an encoder 118) and identifying, using the selected index 104, one or more vector embeddings 116 in the data store 114 similar to the vector embedding 116 of search string 134. Identifying the similar vector embeddings 116 can be performed using various approaches for vector search. For example, in some embodiments, a similarity score can be calculated for each stored vector embedding 116 subject to search using the selected index 104. This similarity score can be calculated as the distance in multidimensional space between a stored vector embedding 116 and the vector embedding 116 of the search string 134. This distance can be calculated using various distance functions such as cosine distance, Euclidian distance, or another distance function as can be appreciated. The vector embeddings 116 can then be ranked according to their similarity score and some number of highest-ranked vector embeddings 116 are selected. This can include, for example, a predefined number of highest-ranking vector embeddings 116. In some embodiments, this can include up to a predefined number of highest-ranking vector embeddings 116 whose similarity scores exceed some minimum threshold.

In some embodiments, the selected vector embeddings 116 are returned in response to the request 138 provided to the search module 130. For example, where the request 138 includes a request 138 issued to a generative AI model 120, the selected vector embeddings 116 are provided to the generative AI model 120. This allows for the generative AI model 120 to be supplemented with the selected vector embeddings 116 when processing the request 138.

The approaches set forth above describe searching for vector embeddings 116 using a single index 104 of the multiple indexes 104. In some embodiments, the search query 132 can include multiple search strategies 136. For example, depending on the particular structure or language of the request 138 the query generation model 140 can determine that multiple search strategies 136 should be used. Accordingly, in some embodiments, the approaches set forth above can be repeatedly performed for each search strategy 136 included in the search query 132.

In some embodiments, the approaches set forth above can be used to generate multiple indexes 104 for multiple different codebases 106. In some embodiments, such as where a particular codebase 106 is not preselected or described in a request 138, the search module 130 can search multiple codebases 106 using the same search query 132. Accordingly, in some embodiments, the vector embeddings 116 provided to the generative AI model 120 can include vector embeddings 116 from different codebases 106. In some embodiments, the search module 130 can rank all vector embeddings 116 from all searched codebases 106 together and then select a subset of those vector embeddings 116 (e.g., the N highest-ranked vector embeddings 116) to provide to the generative AI model 120.

In some embodiments, the search module 130 can also search using a search strategy 136 not corresponding to any of the indexes 104 described herein. For example, in some embodiments, the list of external code references described above used to generate the reference index 128 can be stored in the data store 114 or otherwise made accessible to the search module 130. In some embodiments, the search module 130 can perform a keyword search (e.g., using the search string 134) on these external code references to identify any enhanced chunk 110 including an external code reference matching that keyword. In some embodiments, the search module 130 can select the vector embeddings 116 mapped by the reference index 128 corresponding to the identified enhanced chunks 110. These vector embeddings 116, encoding indications of external code references and descriptions of their use, are then provided to the generative AI model 120. This allows the search module 130 to perform an exhaustive keyword search for any use of a matching external code reference.

Readers will appreciate that the approaches set forth above enable language-agnostic indexing and searching of a codebase 106, independent of the particular programming language used in the codebase 106 and supporting potentially multiple languages used in the codebase. This has advantages over existing code indexing approaches, such as those indexing code based on an Abstract Syntax Tree (AST). In contrast to the approaches set forth herein, these approaches require compiling or interpreting the code to generate the AST. Moreover, as compilation or interpretation is typically done independently across programming languages, these indexing mechanisms may not capture the overall behavior of complex, multi-language systems. Approaches that require compiling or interpreting the code before indexing also causes some portions of the original source code not included in the compiled or interpreted code to not be reflected in the index, such as comments.

The approaches set forth above describe the use of various trained machine learning models, including the enhancement model 112, the description model 126, the query generation model 140, and the generative AI model 120. Although these models are shown and described separately, readers will appreciate that this is merely illustrative and that, in some embodiments, a single model can be used to perform the functions described for multiple of the models described herein. For example, a single model can be used as the description model 126 and the query generation model 140.

Although the approaches set forth herein describe different indexes 104 for vector embeddings 116 generated based on different properties of enhanced chunks 110 (e.g., the content of the enhanced chunks 110, descriptions of the enhanced chunks 110, and external code references in the enhanced chunks 110), readers will appreciate that these properties are merely illustrative and that other properties may also be converted into vector embeddings 116 and indexed 104 instead of or in addition to these properties. For example, code commits affecting the enhanced chunks 110, including the descriptions of the commits, may be accessed from the codebase 106. These commits may then be converted into vector embeddings 116 and indexed 104 as described above. As another example, code references for some programming languages could be split into different categories with their own vector embeddings 116 and indexes 104, such as class attributes versus methods and classes. The resulting index 104 for these vectorized parameters will correspond to its own search strategy 136 as set forth above.

Moreover, although the approaches set forth herein describe generating enhanced chunks 110 from chunks 108 of a codebase 106, readers will appreciate that these approaches may be used in other settings or for other data aside from a codebase 106. For example, the approaches for enhancing chunks 108 based on proximate chunks 108 may be applied to textual time series data such as logs. Continuing with this example, a set of logs close to each other in time can be periodically summarized to extract a summary of a situation or find relevant issues from a vaster corpus of textual data.

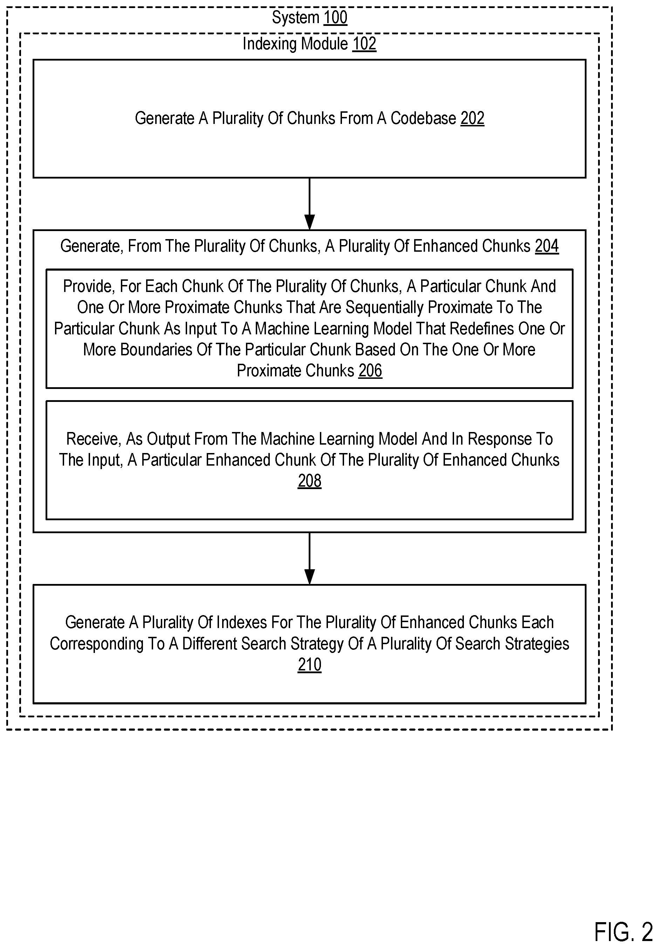

For further explanation, Fig. 2 sets forth a flowchart of an example method of language-agnostic RAG for codebases in accordance with some embodiments of the present disclosure. The method of Fig. 2 can be performed, for example, by the indexing module 102 of the system 100 of Fig. 1. The method of Fig. 2 includes generating 202 a plurality of chunks 108 from a codebase 106. The codebase 106 is a collection of related source code and potentially other data for some software-based project such as an application or software component. Accordingly, in some embodiments, the codebase 106 includes one or more files of source code. In some embodiments, the codebase 106 can also include files of other data such as configuration files, setting files, build or deployment scripts, and the like.

The chunks 108 are segments or subcomponents of the files of the codebase 106. Accordingly, in some embodiments, generating 202 the plurality of chunks 108 includes logically subdividing the codebase 106 into chunks 108 according to some chunking approach as would be appreciated by one skilled in the art. Particularly, in some embodiments, generating 202 the plurality of chunks 108 includes generating 202 the plurality of chunks 108 as having a fixed size (e.g., a fixed amount of data in each chunk 108).

The method of Fig. 2 also includes generating 204, from the plurality of chunks 108, a plurality of enhanced chunks 110. Each enhanced chunk 110 is derived from a corresponding chunk 108 by redefining the boundaries of the corresponding chunk 108. In some embodiments, redefining the boundaries of a chunk 108 can include extending a boundary of a chunk 108 to include data from an adjacent chunk 108, thereby removing that data from the adjacent chunk 108, and/or retracting a boundary of a chunk 108 to remove some data from that chunk 108, thereby adding that data to an adjacent chunk 108. This allows for the enhanced chunks 110 to include some logically bounded portion of the codebase 106 and potentially include contextually relevant or other important portions of data that would otherwise be excluded from the original chunk 108.

Generating 204 the plurality of enhanced chunks 110 can be performed according to a variety of approaches. In some embodiments, a trained machine learning model, such as an enhancement model 112, can be used to generate 204 the enhanced chunks 110. Accordingly, in some embodiments, generating 204 the plurality of enhanced chunks 110 includes providing 206, for each chunk 108 of the plurality of chunks 108, a particular chunk 108 and one or more proximate chunks 108 that are sequentially proximate to the particular chunk 108 as input to a machine learning model that redefines one or more boundaries of the particular chunk 108 based on the one or more proximate chunks 108. The one or more proximate chunks 108 are sequentially proximate to the particular chunk 108 in that they can include one or more chunks 108 immediately preceding and/or following the particular chunk 108 in a sequence of chunks 108. In some embodiments, a moving window of N chunks 108 is used to select the particular chunk 108 and N-1 proximate chunks 108.

In some embodiments, generating 204 the plurality of chunks 108 also includes receiving 208, as output from the machine learning model and in response to the input, a particular enhanced chunk 110 of the plurality of enhanced chunks 110. The trained machine learning model interprets the code of the particular chunk 108 and the one or more proximate chunks 108 and redefines the boundaries of the particular chunk 108 along some logical boundary to produce an enhanced chunk 110 with these redefined boundaries. The particular logical boundaries used when redefining chunk 108 boundaries may depend on the particular programming language used in the particular chunk 108 and the one or more proximate chunks 108. In some embodiments, where the boundary between the particular chunk 108 and the sequentially next proximate chunk 108 is redefined, the data added to or removed from the particular chunk 108 will be removed from or added to the next proximate chunk 108. Thus, when that next proximate chunk 108 is selected as the particular chunk 108 to be provided to the machine learning model it will reflect the redefined boundary of the preceding chunk 108.

The method of Fig. 2 also includes generating 210 a plurality of indexes 104 for the plurality of enhanced chunks 110 each corresponding to a different search strategy 136 of a plurality of search strategies 136. Each index 104 includes a vector index 104 that indexes (e.g., facilitates searching) a set of vector embeddings 116. Particularly, each index 104 indexes a set of vector embeddings 116 derived from the plurality of enhanced chunks 110, with each set of vector embeddings 116 being derived from different data associated with the plurality of enhanced chunks 110. As each index 104 facilitates searching a different set of vector embeddings 116, the search strategy 136 indicates which index 104 should be used to perform a search. Approaches for generating specific indexes 104 of the plurality of indexes 104 are described in further detail below in subsequent flowcharts. Moreover, approaches for searching vector embeddings 116 using a particular search strategy 136 and its corresponding index 104 are also described in further detail below in subsequent flowcharts.

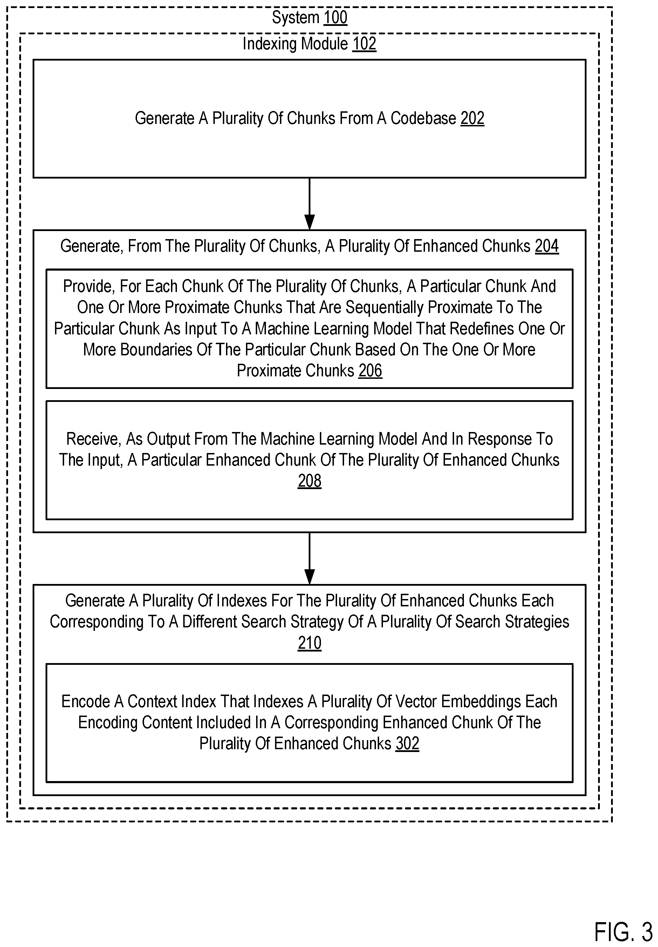

For further explanation, Fig. 3 sets forth a flowchart of another example method of language-agnostic RAG for codebases in accordance with some embodiments of the present disclosure. The method of Fig. 3 is similar to Fig. 2, differing in that generating 210 the plurality of indexes 104 includes encoding 302 a context index 122 that indexes a plurality of vector embeddings 116 each encoding content included in a corresponding enhanced chunk 110 of the plurality of enhanced chunks 110. In other words, in some embodiments, each enhanced chunk 110 is converted into a vector embedding 116, with the content index 122 indexing these vector embeddings 116. For example, in some embodiments, each enhanced chunk 110 can be provided as input to an encoder 118 or other model that outputs a vector embedding 116 of its input. The content index 122 is then generated based on these vector embeddings 116 using any approach for generating vector indexes 104 as would be understood by one skilled in the art. Thus, the resulting content index 122 facilitates searching the set of vector embeddings 116 based on the content of the enhanced chunks 110.

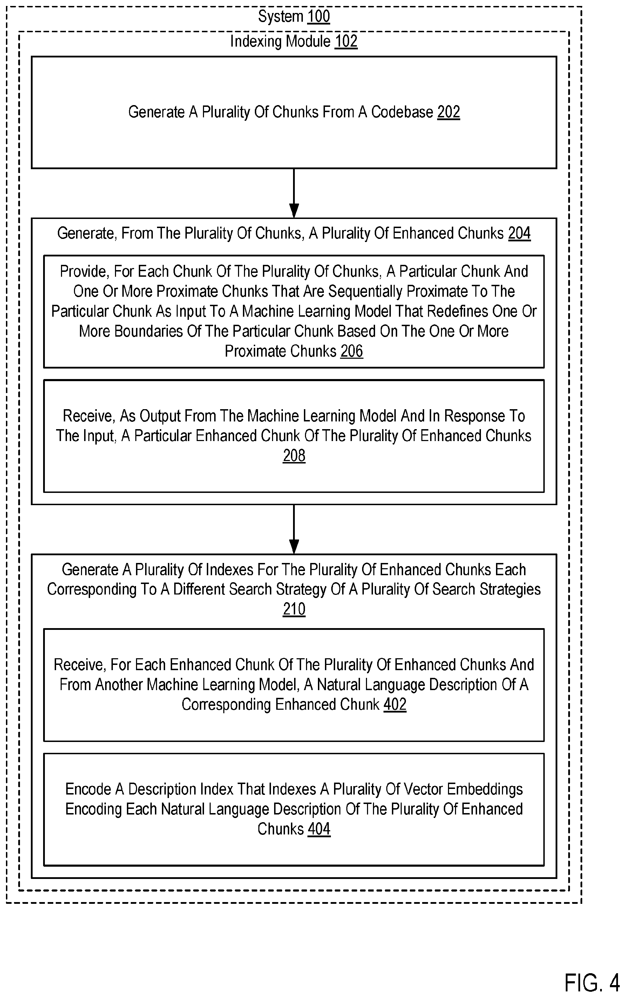

For further explanation, Fig. 4 sets forth a flowchart of another example method of language-agnostic RAG for codebases in accordance with some embodiments of the present disclosure. The method of Fig. 4 is similar to Fig. 2, differing in that generating 210 the plurality of indexes 104 includes receiving 402, for each enhanced chunk 110 of the plurality of enhanced chunks 110 and from another machine learning model, a natural language description of a corresponding enhanced chunk 110. In some embodiments, each enhanced chunk 110 is provided as input to a machine learning model trained to interpret code and generate natural language content, such as a description model 126. For example, the machine learning model used to generate the natural language descriptions can include a language model such as an LLM or SLM, a multimodal modal, or another machine learning model trained for generative AI as can be appreciated. In some embodiments, each enhanced chunk 110 can be provided as part of a prompt to the machine learning model to describe the code included in the corresponding enhanced chunk 110.

The method of Fig. 4 further differs from Fig. 2 in that generating 210 the plurality of indexes 104 also includes encoding 404 a description index 124 that indexes a plurality of vector embeddings 116 encoding each natural language description of the plurality of enhanced chunks 110. In some embodiments, the natural language descriptions of each enhanced chunk 110 can be encoded or converted into a vector embedding 116 using an encoder 118 or another model as described above. The description index 124 is then generated based on these vector embeddings 116 using any approach for generating vector indexes 104 as would be understood by one skilled in the art. Thus, the resulting description index 124 facilitates searching the set of vector embeddings 116 based on the natural language descriptions of the enhanced chunks 110.

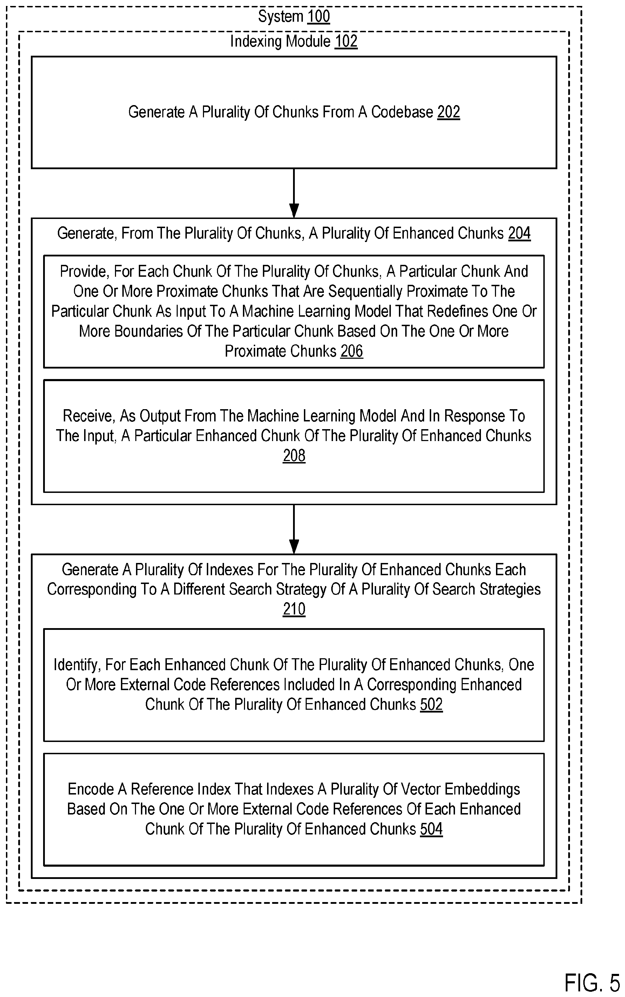

For further explanation, Fig. 5 sets forth a flowchart of another example method of language-agnostic RAG for codebases in accordance with some embodiments of the present disclosure. The method of Fig. 5 is similar to Fig. 2, differing in that generating 210 the plurality of indexes 104 includes identifying 502, for each enhanced chunk 110 of the plurality of enhanced chunks 110, one or more external code references included in a corresponding enhanced chunk 110 of the plurality of enhanced chunks 110. An external code reference is a portion of code within an enhanced chunk 110 that is dependent on some other portion of code outside of the enhanced chunk 110. For example, an external code reference can include a call to a function defined outside of the enhanced chunk 110, creation or use of a class defined outside of the enhanced chunk 110, and the like.

Identifying 502 the external code references in a given enhanced chunk 110 can be performed according to a variety of approaches. In some embodiments, this can include applying a parser, keyword search, or other algorithm for identifying external code references. In some embodiments, a trained machine learning model can be used that accepts, as input, an enhanced chunk 110 and provides, as output, data describing the external code references included in the enhanced chunk 110.

The method of Fig. 5 further differs from Fig. 2 in that generating 210 the plurality of indexes 104 also includes encoding 504 a reference index 128 that indexes a plurality of vector embeddings 116 based on the one or more external code references of each enhanced chunk 110 of the plurality of enhanced chunks 110. In some embodiments, the identified external code references of each enhanced chunk 110 can be encoded or converted into a vector embedding 116 using an encoder 118 or another model as described above. The reference index 128 is then generated based on these vector embeddings 116 using any approach for generating vector indexes 104 as would be understood by one skilled in the art. Thus, the resulting reference index 128 facilitates searching the set of vector embeddings 116 based on the identified external code references of the enhanced chunks 110.

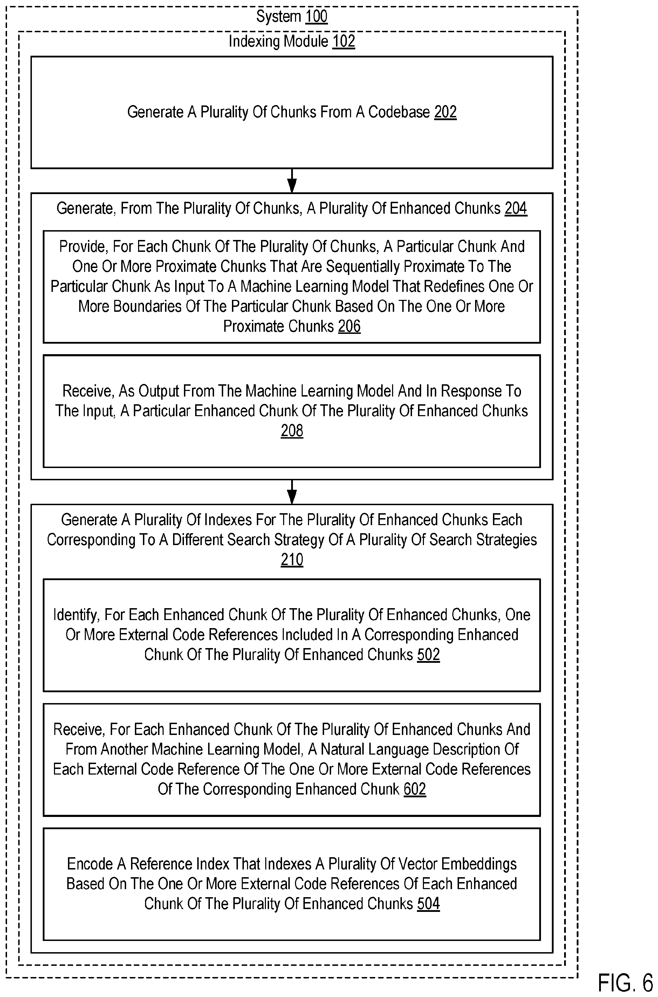

For further explanation, Fig. 6 sets forth a flowchart of another example method of language-agnostic RAG for codebases in accordance with some embodiments of the present disclosure. The method of Fig. 6 is similar to Fig. 5, differing in that generating 210 the plurality of indexes 104 includes receiving 602, for each enhanced chunk 110 of the plurality of enhanced chunks 110 and from another machine learning model, a natural language description of each external code reference of the one or more external code references of the corresponding enhanced chunk 110. In some embodiments, the identified external code references for each enhanced chunk 110 are provided as input to a machine learning model trained to interpret code and generate natural language content, such as a description model 126 as described above. In some embodiments, the identified external code references for each enhanced chunk 110 can be provided as part of a prompt to the machine learning model to describe the external code references.

In some embodiments, each vector embedding 116 indexed by the reference index 128 can also be based on the natural language descriptions of the external code references of the corresponding enhanced chunk 110. In other words, the vector embedding 116 corresponding to a particular enhanced chunk 110 and indexed by the reference index 128 can be based on both data describing or identifying the external code references of the particular enhanced chunk 110 and the descriptions of those external code references. For example, in some embodiments, both the data describing or identifying the external code references of the particular enhanced chunk 110 and the descriptions of those external code references can be provided as input to an encoder 118 or another model that generates the vector embedding 116 corresponding to the particular enhanced chunk 110.

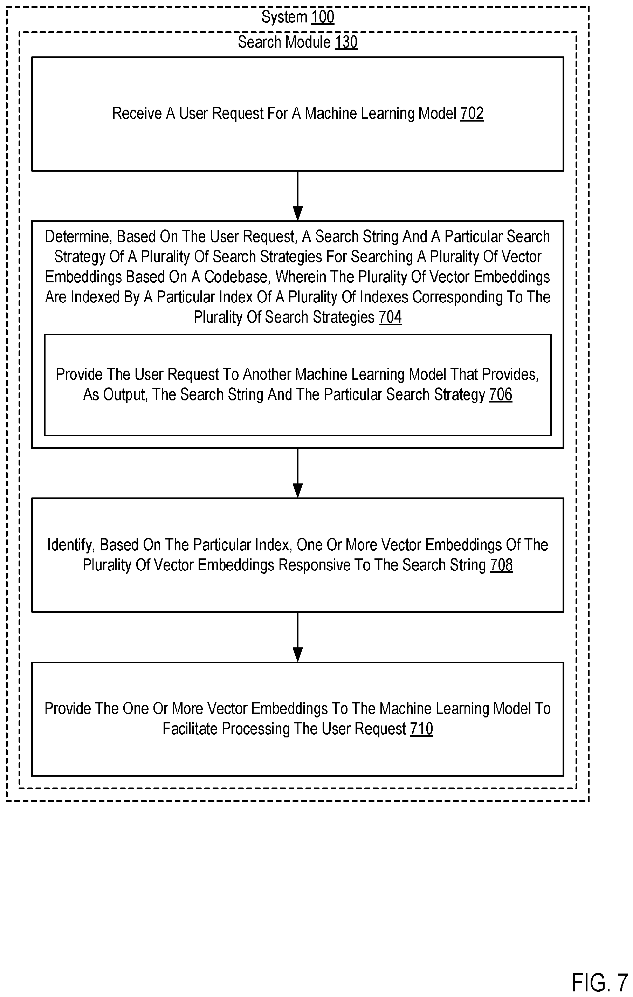

For further explanation, Fig. 7 sets forth a flowchart of another example method of language-agnostic RAG for codebases in accordance with some embodiments of the present disclosure. The method of Fig. 7 can be performed, for example, by a search module 130 of the system 100 of Fig. 1. The methods and approaches of Fig. 7 and subsequent flowcharts can be performed in conjunction with, or independent of, any of the methods or approaches described in the preceding flowcharts. The method of Fig. 7 includes receiving 702 a request 138 for a machine learning model. In some embodiments, the machine learning model can include a generative AI model 120. Accordingly, in some embodiments, the request 138 can include a prompt or other natural language expression describing some content to be generated or other task to be performed by the generative AI model 120. Particularly, in some embodiments, the generative AI model 120 can be configured for RAG whereby external data beyond that used to train the generative AI model 120 is provided to the generative AI model 120 to supplement the knowledge of the generative AI model in processing the request 138.

The method of Fig. 7 also includes determining 704, based on the user request 138, a search string 134 and a particular search strategy 136 of a plurality of search strategies 136 for searching a plurality of vector embeddings 116 based on a codebase 106, wherein the plurality of vector embeddings 116 are indexed by a particular index 104 of a plurality of indexes 104 corresponding to the plurality of search strategies 136. The plurality of vector embeddings 116 are generated by generating the plurality of indexes 104 based on the codebase 106 as described above. Accordingly, in some embodiments, the plurality of vector embeddings 116 are a subset of a larger corpus of vector embeddings 116 that includes multiple subsets each generated based on different data associated with enhanced chunks 110 of the codebase 106 and indexed by a different index 104.

The search strategy 136 is an indication of a particular search approach and, by extension, a particular index 104 to use when searching. The search string 134 is a value to which the plurality of vector embeddings 116 are compared in order to identify those vector embeddings 116 responsive to the search string 134. Determining 704, based on the user request 138, a search string 134 and a particular search strategy 136 can be performed using various approaches. In some embodiments, a machine learning model trained to interpret natural language content, such as a query generation model 140 as described above, can be used to determine 704 the search string 134 and the particular search strategy 136 based on the content of the request 138. Accordingly, in some embodiments, determining 704 the search string 134 and the particular search strategy 136 includes providing 706 the user request 138 to another machine learning model that provides, as output, the search string 134 and the particular search strategy 136.

The method of Fig. 7 also includes identifying 708, based on the particular index 104, one or more vector embeddings 116 of the plurality of vector embeddings 116 responsive to the search string 134. In some embodiments, identifying 708 the one or more vector embeddings 116 responsive to the search string 134 includes generating a vector embedding 116 for the search string 134 (e.g., using an encoder 118) and identifying, using the particular index 104, one or more vector embeddings 116 similar to the vector embedding 116 of search string 134. In some embodiments, a similarity score can be calculated for each of the vector embeddings 116 indexed by the particular index 104. This similarity score can be calculated as the distance in multidimensional space between an indexed vector embedding 116 and the vector embedding 116 of the search string 134. This distance can be calculated using various distance functions such as cosine distance, Euclidian distance, or another distance function as can be appreciated. The vector embeddings 116 can then be ranked according to their similarity score and some number of highest-ranked vector embeddings 116 are selected. This can include, for example, a predefined number of highest-ranking vector embeddings 116. In some embodiments, this can include up to a predefined number of highest-ranking vector embeddings 116 whose similarity scores exceed some minimum threshold.

The method of Fig. 7 also includes providing 710 the one or more vector embeddings 116 to the machine learning model to facilitate processing the user request 138. In some embodiments, providing 710 the one or more vector embeddings 116 can include providing the one or more vector embeddings 116 to an agent accessible to the machine learning model, to an interface exposed by or accessible to the machine learning model, and the like. Thus, these vector embeddings 116 serve as supplemental knowledge (e.g., using RAG) for the machine learning model in processing the user request 138.

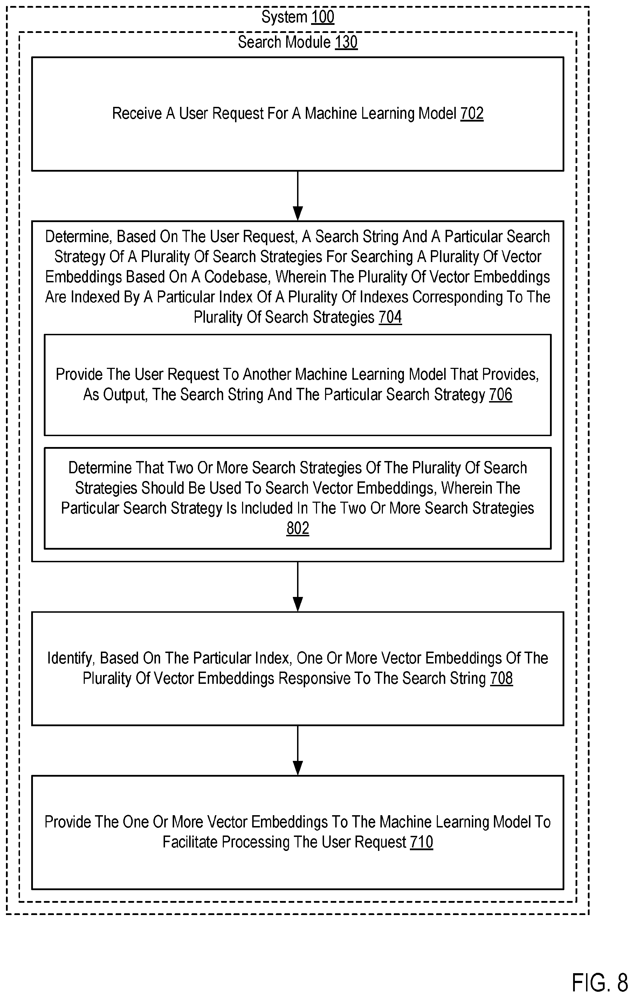

For further explanation, Fig. 8 sets forth a flowchart of another example method of language-agnostic RAG for codebases in accordance with some embodiments of the present disclosure. The method of Fig. 8 is similar to Fig. 7, differing in that the method of Fig. 8 also includes determining 802 that two or more search strategies 136 of the plurality of search strategies 136 should be used to search vector embeddings 116, wherein the particular search strategy 136 is included in the two or more search strategies 136. For example, in some embodiments, depending on the particular nature of the request 138, the machine learning model used to determine 704 the search strategy 136 can determine that information indexed by different indexes 104 are useful or relevant to processing the request 138. Accordingly, in some embodiments, the machine learning model can provide, as output, an indication of multiple search strategies 134 to use.

In embodiments where multiple search strategies 136 are used, identifying 708 vector embeddings and providing 710 the one or more vector embeddings 116 can be performed for each search strategy 136. For example, assume that by-content and by-description search strategy 136 are used to search vector embeddings 116. In this example, the content index 122 is used to identify 708 content-based vector embeddings 116 responsive to the search string 134 and the description index 124 is used to identify 708 description-based vector embeddings 116 responsive to the search string 134. These multiple searches can be performed sequentially or at least partially in parallel. The vector embeddings 116 identified using each index 104 are then provided 710 to the machine learning model. Thus, the approaches set forth herein are applicable to a single search strategy 136 or potentially many search strategies 136 in conjunction.

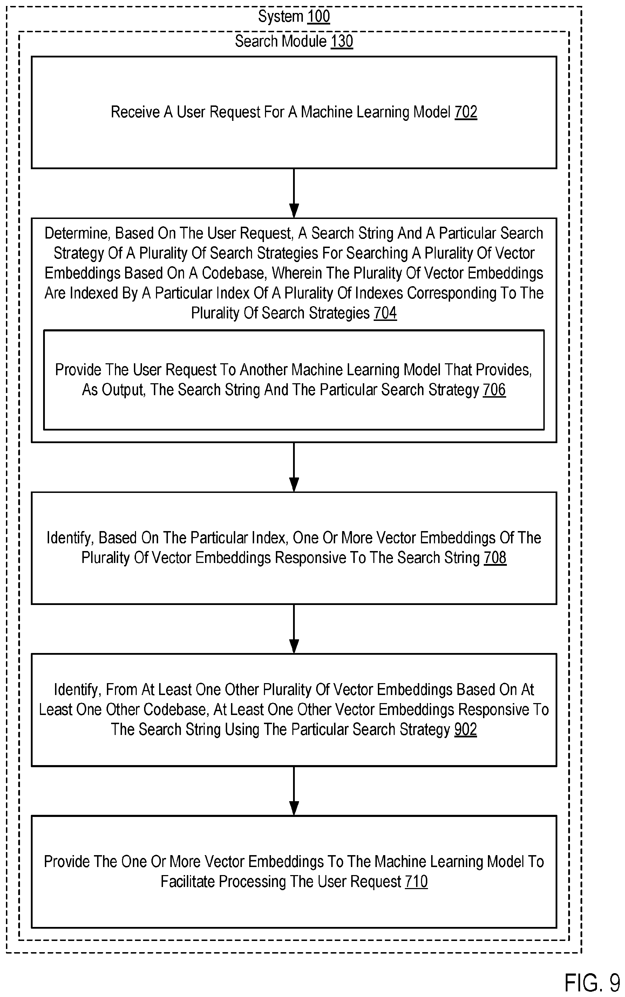

For further explanation, Fig. 9 sets forth a flowchart of another example method of language-agnostic RAG for codebases in accordance with some embodiments of the present disclosure. The method of Fig. 9 is similar to Fig. 7, differing in that the method of Fig. 9 also includes identifying 902, from at least one other plurality of vector embeddings 116 based on at least one other codebase 106, at least one other vector embedding 116 responsive to the search string 134 using the particular search strategy 136. In some embodiments, multiple codebases 106 can be indexed using similar approaches as are set forth above, thereby resulting in a set of indexes 104 and corresponding vector embeddings 116 for each codebase 106. In some embodiments, a search string 134 and search strategy 136 can be used to search vector embeddings 116 for each codebase 106 that are indexed using the index 104 corresponding to the search strategy 136. Thus, a single search string 134 and search strategy 136 can be used to identify vector embeddings 116 responsive to the search string 134 generated from potentially many codebases 106. This allows the machine learning model to be supplemented with vector embeddings 116 based on potentially many codebases 106.

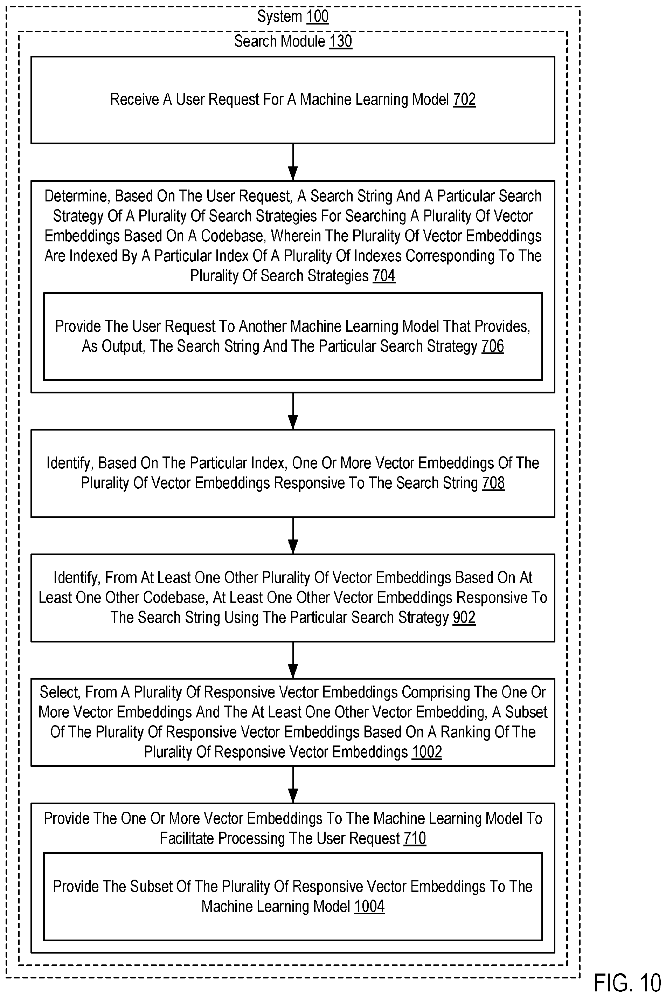

For further explanation, Fig. 10 sets forth a flowchart of another example method of language-agnostic RAG for codebases in accordance with some embodiments of the present disclosure. The method of Fig. 10 is similar to Fig. 9, differing in that the method of Fig. 10 also includes selecting 1002, from a plurality of responsive vector embeddings 116 comprising the one or more vector embeddings 116 and the at least one other vector embedding 116, a subset of the plurality of responsive vector embeddings 116 based on a ranking of the plurality of responsive vector embeddings 116. In some embodiments, there can be a cap or limit on how many vector embeddings 116 can be provided 710 to the machine learning model. For example, the number of vector embeddings 116 to be provided 710 can be limited based on an attention window or other processing limit of the machine learning model. In some embodiments, such as when searching vector embeddings 116 from multiple codebases 106, the number of responsive vector embeddings 116 across all codebases 106 can exceed this limit.

In some embodiments, the responsive vector embeddings 116 across all codebases 106 can be ranked together based on their similarity scores with respect to the search string 134. A subset of these responsive vector embeddings 116 is selected based on the ranking. For example, in some embodiments, selecting 1002 the subset of the plurality of responsive vector embeddings 116 includes selecting the top N ranked vector embeddings 116 across all codebases 106. This subset is then provided 710 to the machine learning model. Accordingly, in some embodiments, providing 710 the one or more vector embeddings 116 to the machine learning model includes providing 1004 the subset of the plurality of responsive vector embeddings 116 to the machine learning model.

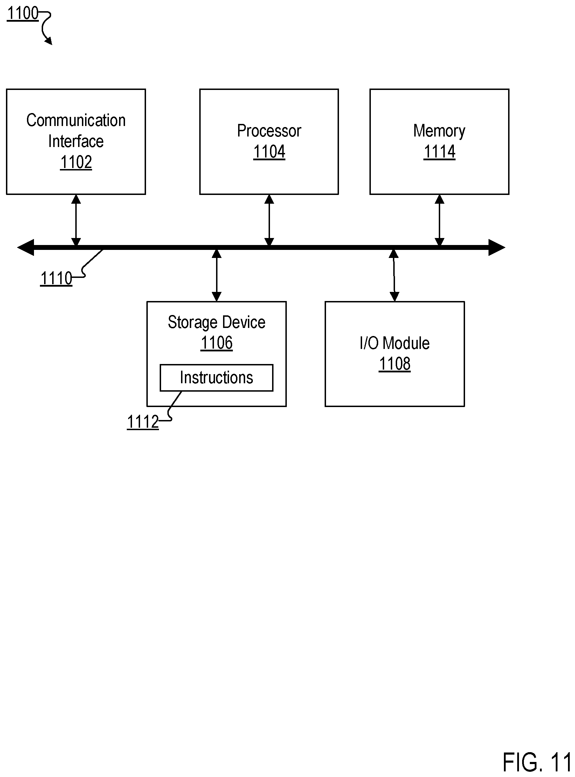

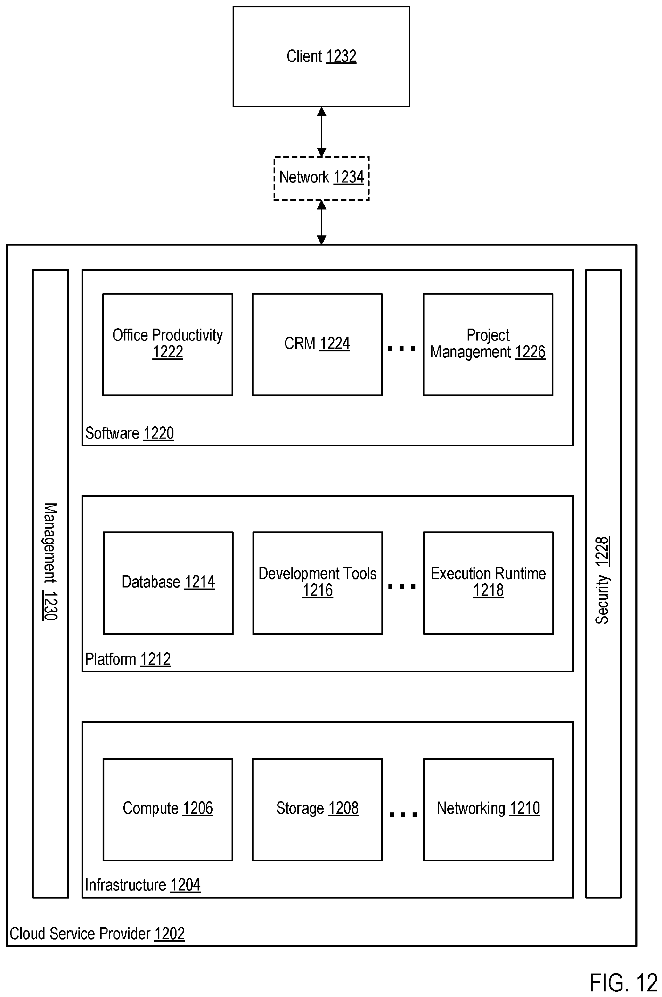

For further explanation, the sections included below provide some details regarding technologies that can be used to support language-agnostic RAG for codebases in accordance with some embodiments. For example, Fig. 11 sets forth an example of a computing device that can be used for some portion of securing an operating system in accordance with some embodiments. As an additional example of technologies that can be used to support language-agnostic RAG for codebases, Fig. 12 sets forth a block diagram of a cloud service provider 1202 service architecture in accordance with some embodiments of the present disclosure.

For further explanation, Fig. 11 illustrates an exemplary computing device 1100 that can be specifically configured to perform one or more of the processes described herein. As shown in Fig. 11, computing device 1100 can include a communication interface 1102, a processor 1104, a storage device 1106, an input/output (I/O) module 1108, and computer memory 1114 communicatively connected one to another via a communication infrastructure 1110. While an exemplary computing device 1100 is shown in Fig. 11, the components illustrated in Fig. 11 are not intended to be limiting. Additional or alternative components can be used in other embodiments. Components of computing device 1100 shown in Fig. 11 will now be described in additional detail.

Communication interface 1102 can be configured to communicate with one or more computing devices. Examples of communication interface 1102 include a wired network interface (such as a network interface card), a wireless network interface (such as a wireless network interface card), a modem, an audio/video connection, and any other suitable interface.

Processor 1104 generally represents any type or form of processing unit capable of processing data and/or interpreting, executing, and/or directing execution of one or more of the instructions, processes, and/or operations described herein. Processor 1104 can perform operations by executing computer-executable instructions 1112 (e.g., an application, software, code, and/or other executable data instance) stored in storage device 1106.

Storage device 1106 can include one or more data storage media, devices, or configurations and can employ any type, form, and combination of data storage media and/or device. For example, storage device 1106 can include any combination of non-volatile media and/or volatile media. Electronic data, including data described herein, can be temporarily and/or permanently stored in storage device 1106. For example, data representative of computer-executable instructions 1112 configured to direct processor 1104 to perform any of the operations described herein can be stored within storage device 1106. In some examples, data can be arranged in one or more databases residing within storage device 1106.

I/O module 1108 can include one or more I/O modules configured to receive user input and provide user output. I/O module 1108 can include any hardware, firmware, software, or combination thereof supportive of input and output capabilities. For example, I/O module 1108 can include hardware and/or software for capturing user input, including, a keyboard or keypad, a touchscreen component (e.g., touchscreen display), a receiver (e.g., an RF or infrared receiver), motion sensors, and/or one or more input buttons.

I/O module 1108 can include one or more devices for presenting output to a user, including a graphics engine, a display (e.g., a display screen), one or more output drivers (e.g., display drivers), one or more audio speakers, and one or more audio drivers. In certain embodiments, I/O module 1108 is configured to provide graphical data to a display for presentation to a user. The graphical data can be representative of one or more graphical user interfaces and/or any other graphical content as can serve a particular implementation. In some examples, any of the systems, computing devices, and/or other components described herein can be implemented by computing device 1100.

For further explanation and as an additional example of a supporting technology for language-agnostic RAG for codebases, Fig. 12 sets forth a block diagram of a cloud service provider service architecture in accordance with some embodiments. The cloud service provider 1202 can deliver a variety of resources through a services-based consumption model where resources are consumed on-demand and as-a-service. Cloud service providers can provide services via cloud platforms such as, for example, Microsoft Azure^{™}, Amazon Web Services ('AWS')^{™}, Google Cloud Platform ('GCP')^{™}, and others. In Fig. 12, the cloud service provider 1202 is accessed from a client device 1234 via a network 1232.

Fig. 12 depicts an embodiment where software 1220 is delivered as a service. Software-as-a-service ('SaaS') is a model where software applications are delivered over the internet as-a-service. Rather than installing and maintaining software locally, users can access software via a web browser or other network connected interface, eliminating the need for complex software and hardware management on the client-side. In Fig. 12, as examples of software 1220 that can be delivered as-a-service, the illustrated embodiment includes office productivity 1222 software, customer relationship management ('CRM') 1224 software, and project management 1226 software. The office productivity 1222 software can include applications designed to facilitate common business and personal tasks, including word processing applications, applications for spreadsheet creation, presentation design applications, and many others. The CRM 1224 software can include applications for managing a business organization's relationships and interactions with customers and potential customers. The project management 1226 software can include applications designed to help teams plan, organize, and manage projects efficiently by facilitating collaboration and tracking the progress of projects. Readers will appreciate that in other embodiments, other types of software can be delivered using a SaaS model.

Fig. 12 depicts an embodiment where platforms 1212 can be delivered as a service. Platform-as-a-service ('PaaS') is a model that provides cloud customers with platform resources that they can use to develop, run, and manage applications without the complexity of such deploying and managing such infrastructure on their own. In Fig. 12, as examples of platform 1212 resources that can be delivered as-a-service, the illustrated embodiment includes database 1214 services, development tools 1216 services, and execution runtime 1218 services. The database 1214 services can be used to provide access to databases without management overhead for the user as the cloud service provider manages the provisioning, scaling, and maintenance of the databases. The development tools 1216 services can provide developers with tools to design, develop, test, and deploy applications without needing to manage the underlying infrastructure. The execution runtime 1218 services can provide environments where applications or other forms of computer program code can be executed, including services to scale the execution environment. Readers will appreciate that in other embodiments, other platform resources can be delivered using a PaaS model.

Fig. 12 depicts an embodiment where infrastructure 1204 can be delivered as a service. Infrastructure-as-a-Service ('IaaS') is a model that provides virtualized computing resources over the internet, such that infrastructure such as servers, storage, networks, and others can be leased on demand rather than purchasing and maintaining physical hardware. In Fig. 12, as examples of infrastructure 1204 resources that can be delivered as-a-service, the illustrated embodiment includes compute 1206 services, storage 1208 services, and networking 1210 services. The compute 1206 services can be used to provide on-demand access to computational resources such as VMs, containers, and serverless functions, where the cloud service provider manages the provisioning, scaling, and maintenance of such resources. The storage 1208 services can provide storage resources that can be used to store and access data, without the need for customers to purchase and manage on-premises physical storage resources. The networking 1210 services can provide the ability to create and manage virtualized networking resources such as, for example, virtual private networks ('VPNs'), firewalls, load balancers, and more. Readers will appreciate that in other embodiments, other infrastructure resources can be delivered using a PaaS model.

The cloud service provider of Fig. 12 also provides management 1230 resources. The management 1230 resources can include, for example, tools and interfaces that enable customers to efficiently deploy, monitor, and manage, their cloud services. Such tools can include web-based management consoles, command-line interfaces ('CLIs'), APIs, automation tools, and other tools.

The cloud service provider of Fig. 12 also provides security 1228 resources. The security 1228 resources can include, for example, tools and services to help customers protect their cloud environments and ensure compliance with security standards. These tools and services can provide specific aspects of security, including identity and access management, network security, threat detection, compliance management, and others.

Readers will appreciate that many of the components described above can be delivered as services from a cloud service provider. For example, the virtual machines, containers, and pods described above can all be delivered via a cloud service provider. In other embodiments, other forms of compute resources can be used in place of the virtual machines or other compute resource. For example, AWS EC2 instances or other form of cloud compute instances can be utilized in place of the virtual machines.

Described herein are methods, apparatuses, and products for language-agnostic retrieval augmented generation for codebases, including: generating a plurality of chunks from a codebase; generating, from the plurality of chunks, a plurality of enhanced chunks, wherein generating the plurality of enhanced chunks comprises: providing, for each chunk of the plurality of chunks, a particular chunk and one or more proximate chunks that are sequentially proximate to the particular chunk as input to a machine learning model that redefines one or more boundaries of the particular chunk based on the one or more proximate chunks; receiving, as output from the machine learning model and in response to the input, a particular enhanced chunk of the plurality of enhanced chunks; and generating a plurality of indexes for the plurality of enhanced chunks each corresponding to a different search strategy of a plurality of search strategies.

Advantages and features of the present disclosure can be further described by the following statements:
1. A method, comprising: generating a plurality of chunks from a codebase; generating, from the plurality of chunks, a plurality of enhanced chunks, wherein generating the plurality of enhanced chunks comprises: providing, for each chunk of the plurality of chunks, a particular chunk and one or more proximate chunks that are sequentially proximate to the particular chunk as input to a machine learning model that redefines one or more boundaries of the particular chunk based on the one or more proximate chunks; receiving, as output from the machine learning model and in response to the input, a particular enhanced chunk of the plurality of enhanced chunks; and generating a plurality of indexes for the plurality of enhanced chunks each corresponding to a different search strategy of a plurality of search strategies.
2. The method of statement 1, wherein generating the plurality of indexes comprises encoding a context index that indexes a plurality of vector embeddings each encoding content included in a corresponding enhanced chunk of the plurality of enhanced chunks, wherein the content index is included in the plurality of indexes.
3. The method of statements 1 or 2, wherein generating the plurality of indexes comprises: receiving, for each enhanced chunk of the plurality of enhanced chunks and from another machine learning model, a natural language description of a corresponding enhanced chunk; and encoding a description index that indexes a plurality of vector embeddings encoding each natural language description of the plurality of enhanced chunks, wherein the description index is included in the plurality of indexes.
4. The method of any combination of one or more of statements 1-3, wherein generating the plurality of indexes comprises: identifying, for each enhanced chunk of the plurality of enhanced chunks, one or more external code references included in a corresponding enhanced chunk of the plurality of enhanced chunks; and encoding a reference index that indexes a plurality of vector embeddings based on the one or more external code references of each enhanced chunk of the plurality of enhanced chunks, wherein the reference index is included in the plurality of indexes.
5. The method of any combination of one or more of statements 1-4, wherein generating the plurality of indexes further comprises: receiving, for each enhanced chunk of the plurality of enhanced chunks and from another machine learning model, a natural language description of each external code reference of the one or more external code references of the corresponding enhanced chunk; and wherein the plurality of vector embeddings are each further based on the natural language description of the one or more external code references of the corresponding enhanced chunk.
6. The method of any combination of one or more of statements 1-5, further comprising: receiving a search query comprising a search string and an indication of a particular search strategy of the plurality of search strategies; and selecting, based on a particular index of the plurality of indexes corresponding to the particular search strategy, one or more vector embeddings indexed by the particular index and responsive to the search string.
7. The method of any combination of one or more of statements 1-6, further comprising determining the particular search strategy and the search string based on a user request.
8. The method of any combination of one or more of statements 1-7, wherein the search query comprises a retrieval augmented generation (RAG) query for another machine learning model and wherein the one or more vector embeddings are provided to the another machine learning model for processing a user request.
9. A method, comprising: receiving a user request for a machine learning model; determining, based on the user request, a search string and a particular search strategy of a plurality of search strategies for searching a plurality of vector embeddings based on a codebase, wherein the plurality of vector embeddings are indexed by a particular index of a plurality of indexes corresponding to the plurality of search strategies; identifying, based on the particular index, one or more vector embeddings of the plurality of vector embeddings responsive to the search string; and providing the one or more vector embeddings to the machine learning model to facilitate processing the user request.
10. The method of statement 9, wherein determining the search string and the particular search strategy comprises providing the user request to another machine learning model that provides, as output, the search string and the particular search strategy.
11. The method of statements 9 or 10: wherein determining the search string and the particular search strategy comprises determining that two or more search strategies of the plurality of search strategies should be used to search vector embeddings, wherein the particular search strategy is included in the two or more search strategies; and wherein identifying the one or more vector embeddings and providing the one or more vector embeddings are performed for each search strategy of the two or more search strategies.
12. The method of any combination of one or more of statements 9-11, further comprising identifying, from at least one other plurality of vector embeddings based on at least one other codebase, at least one other vector embedding responsive to the search string using the particular search strategy.
13. The method of any combination of one or more of statements 9-12, further comprising: selecting, from a plurality of responsive vector embeddings comprising the one or more vector embeddings and the at least one other vector embedding, a subset of the plurality of responsive vector embeddings based on a ranking of the plurality of responsive vector embeddings; and wherein providing the one or more vector embeddings to the machine learning model comprises providing the subset of the plurality of responsive vector embeddings to the machine learning model.
14. An apparatus for language-agnostic retrieval augmented generation for codebases, comprising: a memory; and one or more processing devices, operatively coupled to the memory, the one or more processing devices configured to: generate a plurality of chunks from a codebase; generate, from the plurality of chunks, a plurality of enhanced chunks, wherein, to generate the plurality of enhanced chunks comprises, the one or more processing devices are configured to: provide, for each chunk of the plurality of chunks, a particular chunk and one or more proximate chunks that are sequentially proximate to the particular chunk as input to a machine learning model that redefines one or more boundaries of the particular chunk based on the one or more proximate chunks; receive, as output from the machine learning model and in response to the input, a particular enhanced chunk of the plurality of enhanced chunks; and generate a plurality of indexes for the plurality of enhanced chunks each corresponding to a different search strategy of a plurality of search strategies.
15. The apparatus of statement 14, wherein, to generate the plurality of indexes, the one or more processing devices are configured to encode a context index that indexes a plurality of vector embeddings each encoding content included in a corresponding enhanced chunk of the plurality of enhanced chunks, wherein the content index is included in the plurality of indexes.
16. The apparatus of statements 14 or 15, wherein, to generate the plurality of indexes, the one or more processing devices are configured to: receive, for each enhanced chunk of the plurality of enhanced chunks and from another machine learning model, a natural language description of a corresponding enhanced chunk; and encode a description index that indexes a plurality of vector embeddings encoding each natural language description of the plurality of enhanced chunks, wherein the description index is included in the plurality of indexes.
17. The apparatus of any combination of one or more of statements 14-16, wherein, to generate the plurality of indexes, the one or more processing devices are configured to: identify, for each enhanced chunk of the plurality of enhanced chunks, one or more external code references included in a corresponding enhanced chunk of the plurality of enhanced chunks; and encode a reference index that indexes a plurality of vector embeddings based on the one or more external code references of each enhanced chunk of the plurality of enhanced chunks, wherein the reference index is included in the plurality of indexes.
18. The apparatus of any combination of one or more of statements 14-17, wherein, to generate the plurality of indexes, the one or more processing devices are configured to: receive, for each enhanced chunk of the plurality of enhanced chunks and from another machine learning model, a natural language description of each external code reference of the one or more external code references of the corresponding enhanced chunk; and wherein the plurality of vector embeddings are each further based on the natural language description of the one or more external code references of the corresponding enhanced chunk.
19. The apparatus of any combination of one or more of statements 14-18, wherein, the one or more processing devices are configured to: receive a search query comprising a search string and an indication of a particular search strategy of the plurality of search strategies; and select, based on a particular index of the plurality of indexes corresponding to the particular search strategy, one or more vector embeddings indexed by the particular index and responsive to the search string.
20. The apparatus of any combination of one or more of statements 14-19, wherein the one or more processing devices are configured to determine the particular search strategy and the search string based on a user request.

The statements described herein provide a number of technical improvements to the processing and retrieval of source code data for use in RAG systems. Statement 1 introduces a method of generating semantically meaningful enhanced code chunks by adjusting chunk boundaries using model-derived context. This restructuring can allow for more coherent representation of functional units of code, improving the quality and completeness of retrieved code fragments.

Statements 2 through 5 describe distinct indexing strategies that operate over different data representations of each enhanced chunk: raw code content (Statement 2), natural language descriptions (Statement 3), code references to other functions or definitions (Statement 4), and descriptions of those references (Statement 5). These indexing mechanisms can enable code to be queried and retrieved using multiple dimensions of relevance, thereby improving the system's ability to return precise and contextually appropriate results.

Statements 6 through 8 focus on dynamically selecting an appropriate search strategy based on a user request (Statement 6), using a trained model to interpret natural language input (Statement 7), and supplying the retrieved results to a generative AI model for contextual augmentation (Statement 8). These implementations can improve the adaptability and semantic accuracy of the search process, reduce irrelevant results, and enhance the performance of downstream generative models without retraining.

Statements 9 through 13 further extend these benefits by enabling the system to automatically generate search strategies and search strings from user input (Statement 10), execute multiple search strategies in parallel or sequence (Statement 11), operate across multiple codebases (Statement 12), and select only the most relevant results based on ranking (Statement 13). These features cam improve scalability, retrieval efficiency, and the effective use of model input capacity.

Finally, statements 14 through 20 set forth apparatus-based embodiments of the above methods. These statements define hardware and system configurations that support the efficient execution of the processes described and further ensure that the associated benefits (e.g., language-agnostic code understanding, semantically aware chunking, and adaptive search) that can be realized in practical, scalable computing environments.

Although some embodiments are described largely in the context of a system, method, or in some other way, readers will recognize that embodiments of the present disclosure can also take the form of a computer program product disposed upon computer readable storage media for use with any suitable processing system. Such computer readable storage media can be any storage medium for machine-readable information, including magnetic media, optical media, solid-state media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps described herein as embodied in a computer program product. Persons skilled in the art will recognize also that, although some of the embodiments described in this specification are oriented to software installed and executing on computer hardware, nevertheless, alternative embodiments implemented as firmware or as hardware are well within the scope of the present disclosure.

Readers will appreciate that some embodiments are described in which computer program instructions are executed on computer hardware such as, for example, one or more computer processors. Readers will appreciate that in other embodiments, computer program instructions can be executed on virtualized computer hardware (e.g., one or more virtual machines), in one or more containers, in one or more cloud computing instances (e.g., one or more AWS EC2 instances), in one or more serverless compute instances offered such as those offered by a cloud services provider, in one or more event-driven compute services such as those offered by a cloud services provider, or in some other execution environment.

In some examples, a non-transitory computer-readable medium storing computer-readable instructions can be provided in accordance with the principles described herein. The instructions, when executed by a processor of a computing device, can direct the processor and/or computing device to perform one or more operations, including one or more of the operations described herein. Such instructions can be stored and/or transmitted using any of a variety of known computer-readable media.

A non-transitory computer-readable medium as referred to herein can include any non-transitory storage medium that participates in providing data (e.g., instructions) that can be read and/or executed by a computing device (e.g., by a processor of a computing device). For example, a non-transitory computer-readable medium can include any combination of non-volatile storage media and/or volatile storage media. Exemplary non-volatile storage media include read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Exemplary volatile storage media include RAM (e.g., dynamic RAM).

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claims. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope and spirit of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

While particular combinations of various functions and features of the one or more embodiments are expressly described herein, other combinations of these features and functions are likewise possible. The present disclosure is not limited by the particular examples disclosed herein and expressly incorporates these other combinations.

## Claims

1. A method, comprising:
generating (202) a plurality of chunks (108) from a codebase (106);
generating (204), from the plurality of chunks (108), a plurality of enhanced chunks (110), wherein generating (204) the plurality of enhanced chunks (110) comprises:
providing (206), for each chunk (108) of the plurality of chunks (108), a particular chunk (108) and one or more proximate chunks (108) that are sequentially proximate to the particular chunk (108) as input to a machine learning model that redefines one or more boundaries of the particular chunk (108) based on the one or more proximate chunks (108);
receiving (208), as output from the machine learning model and in response to the input, a particular enhanced chunk (110) of the plurality of enhanced chunks (110); and
generating (210) a plurality of indexes (104) for the plurality of enhanced chunks (110) each corresponding to a different search strategy (136) of a plurality of search strategies (136).

2. The method of claim 1, wherein generating (210) the plurality of indexes (104) comprises encoding (302) a context index (122) that indexes a plurality of vector embeddings (116) each encoding content included in a corresponding enhanced chunk (110) of the plurality of enhanced chunks (110), wherein the content index (122) is included in the plurality of indexes (104).

3. The method of claim 1 or claim 2, wherein generating (210) the plurality of indexes (104) comprises:
receiving (402), for each enhanced chunk (110) of the plurality of enhanced chunks (110) and from another machine learning model, a natural language description of a corresponding enhanced chunk (110); and
encoding (404) a description index (124) that indexes a plurality of vector embeddings (116) encoding each natural language description of the plurality of enhanced chunks (110), wherein the description index (124) is included in the plurality of indexes (104).

4. The method of any one of claims 1 to 3, wherein generating (210) the plurality of indexes (104) comprises:
identifying (502), for each enhanced chunk (110) of the plurality of enhanced chunks (110), one or more external code references included in a corresponding enhanced chunk (110) of the plurality of enhanced chunks (110); and
encoding (504) a reference index (128) that indexes a plurality of vector embeddings (116) based on the one or more external code references of each enhanced chunk (110) of the plurality of enhanced chunks (110), wherein the reference index (128) is included in the plurality of indexes (104).

5. The method of claim 4, wherein generating (210) the plurality of indexes (104) further comprises:
receiving (602), for each enhanced chunk (110) of the plurality of enhanced chunks (110) and from another machine learning model, a natural language description of each external code reference of the one or more external code references of the corresponding enhanced chunk (110); and
wherein the plurality of vector embeddings (116) are each further based on the natural language description of the one or more external code references of the corresponding enhanced chunk.

6. The method of any one of claims 1 to 5, further comprising:
receiving a search query (132) comprising a search string (134) and an indication of a particular search strategy (136) of the plurality of search strategies (136); and
selecting, based on a particular index (104) of the plurality of indexes (104) corresponding to the particular search strategy (136), one or more vector embeddings (116) indexed by the particular index (104) and responsive to the search string (134).

7. The method of claim 6, further comprising determining the particular search strategy (136) and the search string (134) based on a user request (138).

8. The method of claim 6, wherein the search query (132) comprises a retrieval augmented generation, RAG, query for another machine learning model and wherein the one or more vector embeddings (116) are provided to the another machine learning model for processing a user request (138).

9. A method, comprising:
receiving (702) a user request (138) for a machine learning model;
determining (704), based on the user request (138), a search string (134) and a particular search strategy (136) of a plurality of search strategies (136) for searching a plurality of vector embeddings (116) based on a codebase (106), wherein the plurality of vector embeddings (116) are indexed by a particular index (104) of a plurality of indexes (104) corresponding to the plurality of search strategies (136);
identifying (708), based on the particular index (104), one or more vector embeddings (116) of the plurality of vector embeddings (116) responsive to the search string (134); and
providing (710) the one or more vector embeddings (116) to the machine learning model to facilitate processing the user request (138).

10. The method of claim 9, wherein determining (704) the search string (134) and the particular search strategy (136) comprises providing (706) the user request (138) to another machine learning model that provides, as output, the search string (134) and the particular search strategy (136).

11. The method of claim 9 or claim 10:
wherein determining (704) the search string (134) and the particular search strategy (136) comprises determining (802) that two or more search strategies (136) of the plurality of search strategies (136) should be used to search vector embeddings (116), wherein the particular search strategy (136) is included in the two or more search strategies (136); and
wherein identifying (708) the one or more vector embeddings (116) and providing the one or more vector embeddings (116) are performed for each search strategy (136) of the two or more search strategies (136).

12. The method of any one of claims 9 to 11, further comprising identifying (902), from at least one other plurality of vector embeddings (116) based on at least one other codebase (106), at least one other vector embedding (116) responsive to the search string (134) using the particular search strategy (136).

13. The method of claim 12, further comprising:
selecting (1002), from a plurality of responsive vector embeddings (116) comprising the one or more vector embeddings (116) and the at least one other vector embedding, a subset of the plurality of responsive vector embeddings (116) based on a ranking of the plurality of responsive vector embeddings (116); and
wherein providing (710) the one or more vector embeddings (116) to the machine learning model comprises providing (1004) the subset of the plurality of responsive vector embeddings (116) to the machine learning model.

14. An apparatus for language-agnostic retrieval augmented generation for codebases, comprising:
a memory; and
one or more processing devices, operatively coupled to the memory, the one or more processing devices configured to:
generate (202) a plurality of chunks (108) from a codebase (106);
generate (204), from the plurality of chunks (108), a plurality of enhanced chunks (110), wherein, to generate (204) the plurality of enhanced chunks (110), the one or more processing devices are configured to:
provide (206), for each chunk (108) of the plurality of chunks (108), a particular chunk (108) and one or more proximate chunks (108) that are sequentially proximate to the particular chunk (108) as input to a machine learning model that redefines one or more boundaries of the particular chunk (108) based on the one or more proximate chunks (108);
receive (208), as output from the machine learning model and in response to the input, a particular enhanced chunk (110) of the plurality of enhanced chunks (110); and
generate (210) a plurality of indexes (104) for the plurality of enhanced chunks (110) each corresponding to a different search strategy (136) of a plurality of search strategies (136).

15. The apparatus of claim 14, wherein, to generate (210) the plurality of indexes, the one or more processing devices are configured to encode (302) a context index that indexes a plurality of vector embeddings (116) each encoding content included in a corresponding enhanced chunk (110) of the plurality of enhanced chunks (110), wherein the content index (122) is included in the plurality of indexes (104).
